# EUROPEAN PATENT SPECIFICATION

(11) **EP 2 799 982 B1**
(45) Date of publication and mention of the grant of the patent: **12.06.2019**
(21) Application number: 13290097.8
(22) Date of filing: 30.04.2013
(51) Int. Cl.: G06F 9/44, H04W 4/00, H04W 8/18, H04W 4/60, G06F 9/451

(54) **Smart card applications for rendering digital text on a mobile equipment**
Chipkartenanwendungen zur Abbildung von digitalem Text auf einem Mobilgerät
Applications de carte à puce intelligente de rendu de texte numérique sur un équipement mobile

(43) Date of publication of application: 05.11.2014
(73) Proprietor: IDEMIA France, 92400 Courbevoie (FR)
(72) Inventor: De Gioia, Antonio, 92700 Colombes (FR); Nicholls, Matt, 92700 Colombes (FR)
(74) Representative: Nicolle, Olivier

(56) References cited:
- EP-A1- 1 919 156
- US-B1- 7 437 680

## Description

### FIELD OF INVENTION

The present subject matter relates to a smart card and, particularly but not exclusively, to applications associated with the smart card for rendering digital text on a mobile equipment.

### BACKGROUND

Mobile technology has become an integral part in lives of many people across the globe. Mobile equipments (MEs), such as cellular phones and smart phones, provide users with a variety of mobile communication services and computer networking capabilities. These communication services allow exchange of data between network operators and users of the MEs. Further, to provide wireless connectivity, the network operators issue smart cards to the users. A smart card is an electronic circuit which can be installed in the MEs and connected to the MEs. A smart card is typically a silicon based chip, for example, of a format in compliance with the ISO-7816 standard, such as with the ID-0000 format or smaller, and may be removable or embedded in an ME, such as a Subscriber Identity Module (SIM) card, a Universal Integrated Circuit Card (UICC), an embedded subscriber identity module (eSIM), an integrated smart card, a reprogrammable SIM, an embedded smart card, or an embedded universal integrated circuit card (eUICC).

The users may utilize the smart card associated with the MEs to connect to the communication network through a network operator, interchangeably referred to as a service provider. The smart card contains relevant information, such as International Mobile Subscriber Identity (IMSI) and/or authentication key KI or conform to common authentication criteria, for example according to ETSI standards, that enables access to a mobile network. Further, the smart card may be able to receive application protocol data unit (APDU) commands. The smart card can also be a security module able to confer security service, for example, according to Federal Information Processing Standard (FIPS). The smart card can be programmed with various applications that can be accessed through the ME by a user. These applications are provided on the smart card in order to meet user requirements. These applications provide various functionalities, including chatting, cell broadcasting, phonebook backup, location based services, and the like. Such applications, also referred to as applets, are either pre-installed by the network operator on the smart card or may be downloaded afterwards by the user onto the smart card through various online application stores. European patent application EP1919156 is further prior-art.

### SUMMARY

This summary is provided to introduce concepts related to applications associated with a smart card for rendering digital text on a mobile equipment. This summary is not intended to identify essential features of the claimed subject matter nor is it intended for use in determining or limiting the scope of the claimed subject matter. The invention is defined by the appended claims.

In one embodiment of the present subject matter, a method for providing digital text to a user of mobile equipment (ME) is disclosed. The method comprises triggering an application on the smart card upon receiving an event generated by the ME. The method further comprises retrieving, by the application, digital text from the smart card and rendering the digital text to the user through the ME.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to reference like features and components. It should be appreciated by those skilled in the art that any block diagrams herein represent conceptual views of illustrative systems embodying the principles of the present subject matter.
Figure 1 schematically illustrates a network environment implementing a mechanism for providing digital text to a user of a mobile equipment (ME), in accordance with an embodiment of the present subject matter.
Figure 2 illustrates a pictorial representation of the digital text provided to the user, in accordance with an embodiment of the present subject matter.
Figure 3 illustrates a call flow diagram indicating a procedure for providing digital text to the user of the ME, in accordance with an embodiment of the present subject matter.
Figure 4 illustrates a method for providing digital text to the user of the ME, in accordance with an embodiment of the present subject matter.

### DESCRIPTION OF EMBODIMENTS

A smart card is an electronic circuit which can be installed in mobile equipments (MEs). The smart card includes a subscriber identity module application toolkit (STK) that includes a set of commands programmed into the smart card and defines how the smart card may interact directly with the outside world and may also initiate commands independently of the ME and the network. The STK facilitates in programming the smart card with various applications that can be accessed through the ME by a user. These applications are provided on the smart card in order to meet users' requirements. For example, users may install applications on the smart card using the STK, that can enable users to check their bank accounts, pay bills or locate a restaurant by using a STK enabled ME.

However, the STK does not facilitate the applications to provide digital text, such as terms and conditions (T&C) associated with the smart card, to the user on the ME itself. At present, when a user buys a smart card, such as a SIM card, a user's guide is provided along with it in a booklet form. The user's guide may include the T&C associated with the SIM card. The user may buy the smart card from a service provider store or a retail store. The user guide is typically provided as a hard copy to the user which may be expensive to manufacture and includes huge shipping and mailing costs. Further, preparation of the user guide as hard copy may be labor intensive. Furthermore, in scenarios where the user does not have enough time or because of any other reason, the user may not read the user guide at all. This may leave the user unaware about the T&C mentioned in the user guide which may cause problems later.

In one embodiment of the present subject matter, a mechanism for rendering digital text on a mobile equipment (ME) is disclosed. The ME may include mobile phones, tablets, hand-held devices, laptops, and the like. Further, the ME includes a smart card installed in it. The smart card may be a Universal Integrated Circuit Card (UICC), a Subscriber Identity Module (SIM) card, an embedded subscriber identity module (eSIM), an integrated smart card, a reprogrammable SIM, an embedded smart card, or an embedded universal integrated circuit card (eUICC). The smart card may have a dedicated memory for storing data associated with the smart card. The smart card may also store the digital text to be displayed on the ME. For this, the smart card can include an application or applet to facilitate the rendering of the digital text.

According to an implementation of the present subject matter, the smart card associated with the ME receives an event, generated by the ME. In an implementation, the event is generated according to the standard mechanism 3GPP TS 43.019.

In another implementation, the event comprises obtaining a terminal profile download associated with the ME according to the standard mechanism 3GGP GSM 11.11 [20]. The terminal profile may be understood as a profile that includes a description of the functionalities of the smart card that the ME is capable of supporting.

In another implementation, the event is generated on an activation of the ME by the user or on a card reset. For example, every time the ME is switched on, the ME may share its terminal profile or other profiles with the smart card, thereby triggering the event. Further, depending on the status of the applet, the event may initiate or trigger the applet just once or multiple times. For example, if the digital text to be displayed by the applet is a T&C document as mentioned above, the applet may be triggered more than once until the user accepts the T&C. In another example, if the digital text is to be displayed only once to the user, the applet may be triggered only on the first activation and may be disabled after the first initiation.

In one implementation, the applet may be associated with a flag to indicate a status of the applet, i.e., whether the applet is to be triggered by the event or not. Thus, when the event is triggered, the smart card checks the status of the flag and accordingly triggers the application if, for example, the flag status is ON. In another example, in case the applet is to be triggered just once after the first terminal profile download, the subsequent triggering of the applet by the event may be disabled by setting the flag status to OFF after the first triggering. In other implementations, the applet may be triggered every time the event occurs by leaving the flag status as ON. It will be understood that the flag can be stored in a non-volatile memory so that the flag status does not reset in case the ME is switched off.

Further, the other events that may trigger the applet may be, for example, one of a first update of local information (LOCI), an external file update according to standard mechanism 3GPP GSM 11.14, call connected, call disconnected, user activity (pressing of buttons on the ME, and idle screen available (blank screen). This may enable the smart card to identify various capabilities of the ME. In an alternative implementation, the event may be generated at any other time in addition to or other than on ME activation.

Upon receipt of the event by the smart card, the smart card may trigger the application deployed on the smart card, for example, based on a flag status associated with the application as discussed above. Typically, the applications allow a user to interact with the smart card. In one implementation, the application may be a JAVA applet, and may be pre-installed in the smart card by a network operator. In another implementation, the application may be a plug-in for web browsers, such as SIM Alliance Toolbox (S@T) and wireless internet browser (WIB).

In an implementation, the application, upon being triggered, sends a proactive command to the user of the ME or a network operator. A proactive command, hereinafter referred to as command, may be understood as the command that an application uses to interact with the user or the network operator. In an example, the commands can include Get Input, Display Text, and Setup Menu. In the said implementation, the command sent by the application may be a request for determination of a type of subscription of the smart card. The subscription type may include, for example, a postpaid subscription, a prepaid subscription, a business subscription or a group subscription, and a consumer subscription. In another example, information about the type of subscription can be obtained by the smart card by sending a request of Unstructured Supplementary Service Data (USDD) to the network operator in order to check the type of subscription of the smart card at the level of the network operator.

Based on the response to the command provided by the user or the network operator, the application identifies content of the digital text to be provided to the user. For example, if the user or the network operator provides the type of subscription to the application, the application may accordingly retrieve the digital text associated with the smart card and based on the response. Further, for different types of subscription of the smart card, the content of the digital text may be different. For example, the content of the digital text may be different for a prepaid subscription type in comparison to a postpaid subscription type. Therefore, in a case where the digital text includes T&C of the smart card, if the response to the command provided by the user is "prepaid subscription", then the T&C related to the prepaid subscription may be retrieved. If the response to the command provided by the user is "postpaid subscription", then the T&C related to the postpaid subscription may be retrieved.

In another implementation, the application, upon being triggered identifies a default digital text to be rendered on the ME and accordingly retrieves the digital text for rendering without issuing any proactive command.

The digital text to be rendered may be retrieved by the application from the memory of the smart card. In an example, the digital text may be terms and conditions (T&C) of the smart card or any other text. According to an implementation, the digital text may be stored in a compressed or in an uncompressed form. In case the text is stored in compressed form in the memory, the smart card may also include a decompression application to decompress the digital text.

According to an implementation of the present subject matter, for facilitating the recognition of appropriate content from the digital text for a particular type of subscription by the application, the network operator may pre-define certain rules in the smart card. In an alternative, the application can send a setup menu command to the ME to set up a STK menu on the ME in order to facilitate the user to refer to the digital text and select the section of the digital text of interest. In yet another alternative implementation, the digital text may be retrieved using integrated circuit card identifier (ICCID) and international mobile subscriber identity (IMSI) contained in the smart card.

Thereafter, the application renders the digital text to the user through the ME. According to an implementation, the application renders the digital text in an index form. For example, in case the digital text is very large, the application may render the digital text by dividing the same into small sections, enabling the user to directly go to a section of his interest. In one implementation, the application may use a graphical user interface (GUI) to render the digital text. Further, along with the digital text, the GUI can include options, such as buttons, for user selection. For example, the GUI may display three buttons, one each for the options of accepting the text, rejecting the text and reading the text later. Thus, the user can select any one of the options by clicking on the button or selecting the option through any other means provided by the GUI, as can be appreciated by a person skilled in the art.

Further, in an implementation, the user may opt to read the digital text immediately or at a later point. In an example, when T&C associated with the smart card are provided to the user, the user may choose to accept the T&C at that time. However, an option to accept the T&C later is also provided to the user. In such a scenario, the application is configured to send reminders to the user to accept the T&C. A timer or a counter can be set by the application to send reminders to the user through the GUI. Once the user accepts the T&C, the application provides network authentication of the smart card to the user and all associated services can be activated.

Further, in an implementation, the application is configured to allocate a fixed identical fake IMSI to the smart card until the T&C are not accepted by the user and to switch to the correct IMSI after acceptance of the T&C by the user. By this configuration, the network authentication by the smart card is avoided until the T&C are not accepted by the user while at the same time, the user can at least partly use the ME based on the fixed identical fake IMSI number. Thus, the user may receive degraded services instead of being disconnected from the network.

Further, in an implementation, in case the user does not accept the T&C, by either rejecting the T&C or postponing acceptance, the application may generate a wrong result (RES) in a manner that is transparent to the ME. The ME may then send the generated wrong RES to the network operator, thereby indicating that the user has not accepted the T&C. In another implementation, a status word error may be generated by the smart card during the authentication, when the T&C are not accepted by the user. Similar to the wrong RES, the status word can indicate to the network operator that the T&C have not been accepted by the user. Thus, in both cases of wrong RES and status word error, the network authentication could fail due to non-acceptance of the T&C or may result in a degraded service level being provided to the user, depending on the network settings. The degraded service level could include, for example, slower speed, non access of value added services, and the like.

Further, the application may be configured to delete the digital text from the memory of the smart card and generate smart card use files, such as personal directories (ADN), service dialing numbers (SDN), and fixed dialing numbers (FDN) once the T&C are accepted. Therefore, the present subject matter may facilitate in providing digital text to the user of ME that may result in reduction of manufacturing, shipping, and mailing costs. Further, the application may allow in managing less space of the memory of the smart card by enabling generation of smart card use files after deletion of the digital text.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Further, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

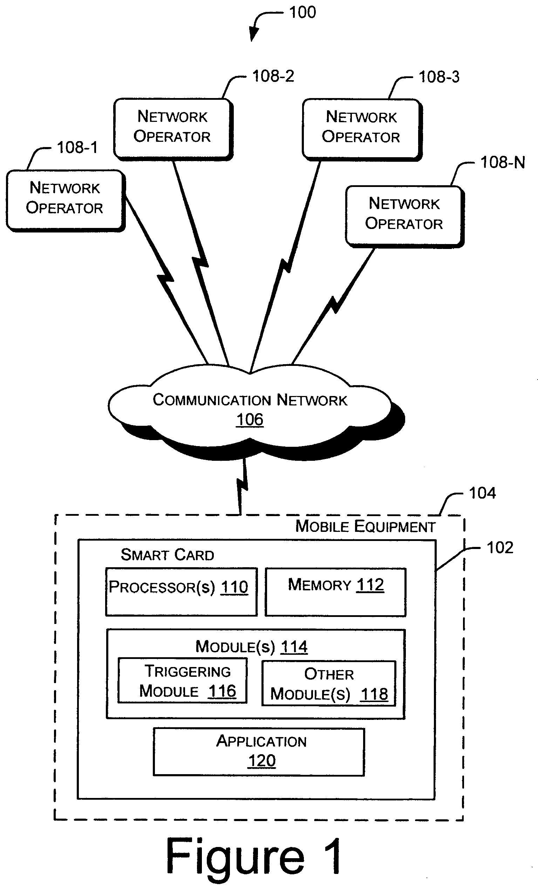

The manner in which a mechanism for providing digital text to the user of the ME has been explained in details with respect to the Figures 1-4. While aspects of described mechanism for providing digital text to the user of the ME can be implemented in any number of different computing systems, transmission environments, and/or configurations, the embodiments are described in the context of the following exemplary system(s).

Figure 1 schematically illustrates a network environment 100 implementing a mechanism for providing digital text to a user of a mobile equipment (ME) 104, in accordance with an embodiment of the present subject matter. The ME 104 may include without limitation mobile phones, tablets, hand-held devices, laptops, and the like. The network environment 100 includes a smart card 102 installed in the ME 104. The smart card 102 may include a Universal Integrated Circuit Card (UICC), a Subscriber Identity Module (SIM) card, an embedded eUICC or eSIM. The ME 104 having the smart card 102 is connected to a communication network 106, according to an embodiment of the present subject matter.

The ME 104 may be used by the user to access telecom services through the communication network 106. The communication network 106 may be a wireless network, a wired network, or a combination of wired and wireless network. The communication network 106 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), Long Term Evolution (LTE) Network, and the like. Further, depending on the technology, the communication network 106 includes various network entities, such as gateways, routers; however, such details have been omitted for ease of understanding.

Further, the network environment includes a plurality of network operators 108-1, 108-2, 108-3, ...., and 108-N, hereinafter collectively referred to as the plurality of network operators 108 and individually referred to as the network operator 108. The network operator 108 may be a telecom service provider which provides telecom services, such as call, Short Message Service (SMS), Multimedia Messaging Service (MMS), and data service through a network.

As shown in Figure 1, the smart card 102 includes processor(s) 110, a memory 112, module(s) 114, and an application 120. Using, a subscriber identity module application toolkit (STK), present on the smart card 102, the smart card 102 can be programmed with the application 120 that can be accessed by the user through the ME 104. The STK provides an interface between the ME 104 and the smart card 102. The application 120 allows the user to interact with the smart card 102. In one implementation, the application 120 may be a JAVA applet, a plug-in for web browsers, such as SIM Alliance Toolbox (S@T), PICO and wireless internet browser (WIB), or a web server. Further, the application 120 may be pre-installed in the smart card 102 by the network operator 108. The network operator 108 may also update the smart card 102 with new applications without requiring the user to upgrade the ME 104.

The processor(s) 110 may be implemented as one or more microprocessors, microcomputers, microcontrollers, digital signal processors, central processing units, state machines, logic circuitries, and/or any devices that manipulate signals based on operational instructions. Among other capabilities, the processor(s) 110 may be configured to fetch and execute computer-readable instructions stored in the memory 112. The memory 112 may include any computer-readable medium known in the art including, for example, volatile memory, such as static random access memory (SRAM) and dynamic random access memory (DRAM), and/or non-volatile memory, such as read only memory (ROM), erasable programmable ROM, and flash memories.

The memory 112 may also include digital text associated with the smart card 102 and a flag associated with the digital text. The digital text may be terms and conditions (T&C) or any other text associated with the smart card 102. The digital text stored in the memory 112 may be stored in a compressed or an uncompressed form. Further, the module(s) 114 may include, for example, a triggering module 116 and other module(s) 118. The other module(s) 118 may include programs or coded instructions that supplement applications or functions performed by the smart card 102.

According to an implementation of the present subject matter, the triggering module 116 of the smart card 102 is configured to receive an event, generated by the ME 104. In an implementation, the application 120 is registered to the event according to a standard mechanism. For example, in case of a call, the ME 104 may send an event to the smart card 102 in accordance with a standard mechanism 3GPP TS 43.019. In one implementation, to trigger the application 120, a flag may be associated with the application 120. The flag can be stored in the non-volatile memory of the smart card 102. The flag may be inactive by default, and may be activated in reply to the event.

In another implementation, the event may be generated on a first activation of the ME 104 by a user, i.e., at a time when the ME 104 is switched ON by the user for the first time. In another implementation, the event may be generated at any other time based on the status of the flag, as discussed earlier.

The generated event may be a terminal profile download or any other event or command according to a standard, such as the standard 3GPP GSM 11.11[20]. The terminal profile download may be understood as a profile that includes at least a description of the functionalities of the smart card 102 that may be supported by the ME 104.

Further, the other events may include, for example, first update of local information (LOCI), external file update according to standard mechanism 3GPP GSM 11.14, call connected, call disconnected, user activity (pressing of buttons on the ME 104), and idle screen available (blank screen). Therefore, the event enables the smart card 102 to identify various capabilities of the ME 104.

Upon receipt of the event, the triggering module 116 triggers the application 120 deployed on the smart card 102. According to an implementation, the application 120, upon being triggered, retrieves default digital text for rendering on the ME. In another implementation, the application 120 can send a proactive command to the user of the ME 104 or to the network operator 108. A proactive command, hereinafter referred to as a command, may be understood as the command that the application 120 uses to interact with the user or the network operator 108. In an example, the command can include a request to Get Input, Display Text, and Access Setup Menu. In said implementation, the command sent by the application 120 may be a request for determining a type of subscription of the smart card 102. The subscription type may include, for example, a postpaid subscription, a prepaid subscription, a business subscription or a group subscription, and a consumer subscription.

According to an implementation, for facilitating the check of the type of subscription, a request of Unstructured Supplementary Service Data (USDD) is performed to the network operator 108 in order to get the type of subscription.

Based on the response provided by the user or the network operator 108, the application 120 may identify content of the digital text to be provided to the user. In an implementation, the digital text may include terms and conditions (T&C) associated with the smart card 102 or any other text. For example, if the user or the network operator 108 specifies the type of subscription, the application 120 may identify the T&C for the smart card 102 from amongst the T&C of different subscription types. As will be understood, for different types of subscription of the smart card 102, the content of the T&C may be different. For example, the content of the T&C may be different for a prepaid subscription type in comparison to a postpaid subscription type. Therefore, in a case where the digital text includes T&C of the smart card 102, if the response to the command provided by the user is "prepaid subscription", then the T&C related to the prepaid subscription may be identified. If the response to the command provided by the user or the network operator 108 is "postpaid subscription", then the T&C related to the postpaid subscription may be identified.

Further, in an implementation, for facilitating the identification of appropriate content from the digital text, the network operator 108 may pre-define certain rules in the smart card 102. In another implementation, the appropriate content of the digital text may be identified using integrated circuit card identifier (ICCID) and international mobile subscriber identity (IMSI) contained in the smart card 102, a proprietary file or by performing a request of Unstructured Supplementary Service Data (USSD) to the network operator 108. Further, the network operator 108 may update the digital text through an external file update command as is known in the art. Thus, in case the T&C is changed or the subscription changes or for any other reason, the network operator 108 can update the digital text and accordingly change the flag status to ensure that the digital text is displayed on the ME 104.

Upon identification of the digital text, the application 120 is configured to retrieve the digital text from the memory 112 of the smart card 102. As indicated earlier, the digital text may be stored in a compressed or an uncompressed form. In case the digital text is stored in the memory 112 in the compressed form, the smart card 102 may also include a decompression application (not shown in figure 1) to decompress the digital text. In an implementation, the digital text may be compressed by using conventionally known techniques, such as a Lempel-Ziv-Markov chain algorithm (LZMA) technique and a Huffman coding technique.

Thereafter, the application 120 renders the digital text to the user through the ME 104. According to an implementation, the user may opt to read the digital text immediately or at a later point. For this, various options may be provided by the application 120 through an interface, such as a graphical user interface (GUI). For example, the options may be provided as buttons that the user can select. In another example, the options may be provided as menu items. In one example, if the digital text provided by the application 120 to the user is T&C associated with the smart card 102, then the user may choose to accept the T&C at that time. However, an option to accept the T&C later is also provided to the user. In latter case, the T&C may be available to the user through the STK menu. Further, when the user opts for later reading of the T&C, the application 120 may be configured to send reminders to the user to accept the T&C. In an implementation, a timer may be set by the application 120 to facilitate sending of reminders to the user for accepting the T&C. In another implementation, the reminders may be sent to the user after pre-defined proactive commands have been sent by the ME 104.

Further, the application 120 may be configured to provide network authentication of the smart card 102 to the user, once the user accepts the T&C. The network authentication of the smart card 102 is not provided to the user until the T&C are accepted by the user.

Further, the application 120 may be configured to allocate a fake IMSI to the smart card 102 while the T&C are not accepted by the user and to switch to the correct IMSI after acceptance of the T&C by the user. For example, for avoiding the authentication while the T&C are not accepted by the user, the smart card 102can have a fixed fake IMSI, which can be the same for all smart cards. The ME 104 provides the IMSI to the network operator 108 for the authentication and to find the correct result RES of the authentication from the smart card 102. But the authentication process is set to not provide anything for this fake IMSI and the network operator 108 thus identifies that the user hasn't accepted the T&C. In one implementation, the network operator 108 may not know which user has not accepted the T&C because the fake IMSI may be the same for all. The ME 104 however could keep working without any issue or with a degraded service level, based on the network settings. In another implementation, the network operator 108 may be configured to authenticate the user using a second or supplementary authentication process, for example, based on a password or another authentication key, while the user does not accept the T&C to provide a secondary level of authentication.

After acceptance of T&C by the user, the application 120 switches to the correct IMSI. It then sends the refresh proactive command to the ME 104 so that the ME 104 restarts from the beginning and this time everything works correctly, and the authentication with the network operator 108 occurs successfully. As mentioned earlier, this process may be transparent to the network operator 108 and so for the network operator 108, this user never had authentication problem.

Further the application is configured to disable the network authentication to the smart card (102) or provide degraded service levels in case of non-acceptance of the T&C by the user. According to an implementation, the disable authentication may be performed based on wrong or different result RES generated by the application 120. The result RES is transparent for the ME 104. The ME 104 forwards the RES to the network operator 108 and it is checked by the authentication center of the network operator 108. In case of wrong or different result RES the authentication center recognizes it as malicious behavior and understands that the user has not accepted the T&C yet. After acceptance of T&C by the user, the application 120 switches the authentication mechanism to the normal behavior. As mentioned earlier, the application 120 sends the refresh proactive command to the ME 104 to enable authentication. The ME 104 restarts from the beginning and this time everything works correctly, with the authentication happening successfully with the network operator 108.

According to another implementation, the disable authentication is performed in case of status error generated by the smart card 102. In this case, the ME 104 recognizes that there is something wrong in the smart card 102 and the network operator 108 does not receive any message. After acceptance of T&C by the user, the application 120 switches the authentication mechanism to the normal behavior. As discussed above, the application 120 sends the refresh proactive command to the ME 104. The ME 104 restarts from the beginning and this time everything works correctly, with the authentication happening successfully with the network operator 108.

In an implementation, as the memory 112 of the smart card 102 may have limited space, the application 120 may be configured to delete the digital text from the memory 112 of the smart card 102, once the user accepts the T&C. The application 120 may then generate a plurality of use files for the smart card 102, thereby utilizing the limited space of the memory 112 efficiently. Examples of the use files may include, but are not limited to, personal directories (ADN), service dialing numbers (SDN), and fixed dialing numbers (FDN). In an alternative implementation, when the application 120 is not configured to delete the digital text from the memory 112 of the smart card 102, the use files may be created during the manufacture of the smart card 102.

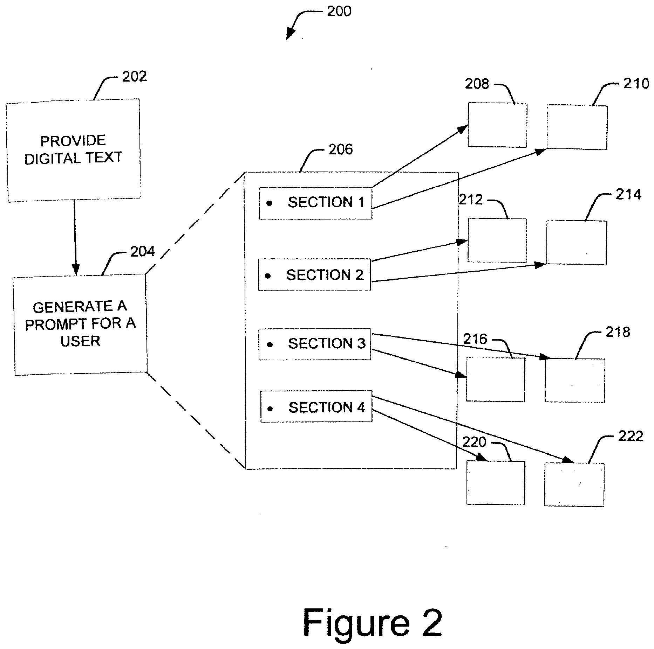

In an implementation, the application 120 renders the digital text in an index form. For example, in case the digital text is very large, the application 120 may render the digital text by dividing the digital text into small sections, thereby enabling the user to directly go to any section of the digital text that may be of interest to the user. Details about rendering of the digital text in index form are described in conjunction with Fig. 2 in later paragraphs of the specification.

According to an implementation, the application 120 may send a command, such as "Setup Menu", to the ME 104 to set up an STK menu on the ME 104. As mentioned earlier, the STK menu may facilitate the user to refer to the digital text and select the section of the digital text of interest. In an alternative implementation, the application 120 may send a command "Launch Browser" to enable launch of a browser to render the digital text to the user on web. The address of the launch browser can be the internet URL address where the ME can download the page where the T&C is showed. In another example, it can be the address direct to the SCWS (smart card web server) applet, if the text is showed in web version but stored in the SIM as a web site using the SCWS.

The present subject matter facilitates in providing digital text to the user of ME 104 that may result in reduction of manufacturing, shipping, and mailing costs. Further, the application 120 may allow in managing less space of the memory 112 of the smart card 102 by enabling generation of smart card use files after deletion of the digital text.

Figure 2 illustrates a pictorial representation 200 of the digital text provided to the user, in accordance with an embodiment of the present subject matter. As shown in Figure 2, block 202 depicts the digital text to be provided to the user. As described above, the application 120 may be configured to retrieve the digital text from the memory 112 of the smart card 102 and provide it to the user. At block 204, the application 120 may be configured to generate a prompt for the user while rendering the digital text to the user. The prompt may be understood as a notification that provides the user with options to read the digital text immediately or at a later point in time.

In scenarios where the digital text is large in size, the application 120 may render the digital text in an index format. As may be shown in block 206, an indexed digital text is provided to the user. The application 120 may render the digital text by dividing the same into small sections, enabling the user to directly go to any section of the digital text that may be of interest to the user. As can be seen in figure 2, the indexed digital text provided at block 206 includes section 1, 2, 3 and 4. These sections in the index may be considered as headers or subtopics based on which the digital text is divided by the application 120.

Further, the user may click on any of the sections in the index to access the content of the respective sections. For example, the content of section 1 is provided in blocks 208 and 210. The content of section 2 may be provided in blocks 212 and 214. Similarly, the content of section 3 and 4 may be represented by blocks 216 and 218, and blocks 220 and 222, respectively.

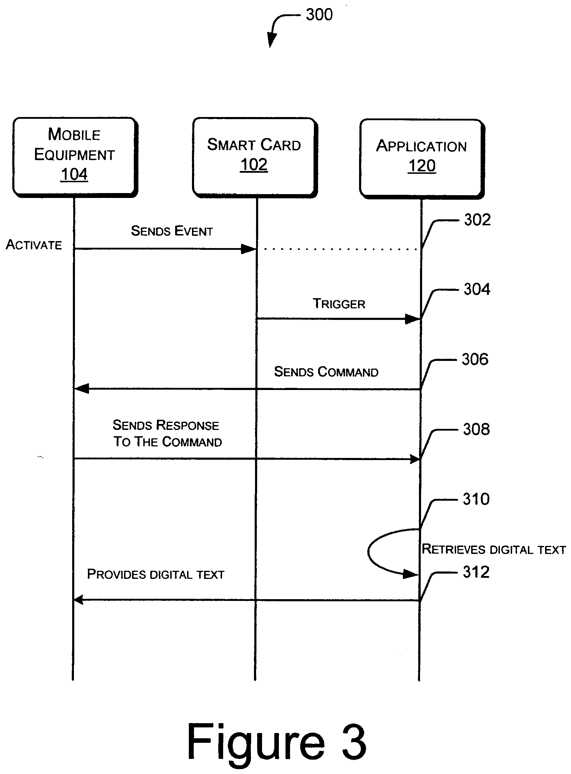

Figure 3 illustrates a call flow diagram 300 indicating a procedure for providing digital text to a user of a mobile equipment (ME) 104, in accordance with an embodiment of the present subject matter. As shown in Figure 3, at step 302, the ME 104 sends an event to the smart card 102. In an implementation, the event may be generated on an activation of the ME 104 by the user. In said implementation, the event may include a terminal profile download of the ME 104. The terminal profile is a profile that includes a description of the functionalities of the smart card 102, that the ME 104 is capable of supporting. In an alternative implementation, the event can be different, for example, call connected and call disconnected.

At step 304, the smart card 102 triggers an application 120 upon receiving the event. The application 120 may be pre-installed in the smart card 102. Subsequently, at step 306, the application 120 may send a command to the user of the ME 104 or to a network operator 108. The command may be a request for determining a type of subscription of the smart card 102. The subscription type may include, for example, a postpaid subscription, a prepaid subscription, business subscription or group subscription, and consumer subscription, At step 308, the user of the ME 104 or the network operator 108 may send a response to the command. The response may include a description of the type of subscription of the smart card 102 to the application 120. In an example, the response to the command provided by the user or the network operator 108 may be a "prepaid subscription". In another example, the response to the command provided by the user or the network operator may be a "postpaid subscription". In another implementation, in case a default text is to be rendered, the method 300 may directly proceed to step 310 without executing steps 306 and 308.

At step 310, the application 120 retrieves digital text from memory 112 of the smart card 102, based on the response received for the command. The digital text may include terms and conditions (T&C) associated with the smart card 102 or any other text. In case the digital text includes T&C, for different types of subscription of the smart card 102, the content of the T&C may be different. For example, the content of the T&C may be different for a prepaid subscription type as compared to a postpaid subscription type. Accordingly, the application 120 may identify appropriate content of the T&C and retrieves the same from the memory 112 of the smart card 102.

At step 312, the application 120 provides the digital text to the user of the ME 104. In an implementation, the application 120 renders the digital text in an index form. The user may read the digital text immediately or at a later stage by selecting an option provided on a GUI. According to an implementation, the user may read the digital text from a menu, set up on the ME 104. In another implementation, the application 120 may send a command to the ME 104 for launching a web browser for providing the digital text to the user.

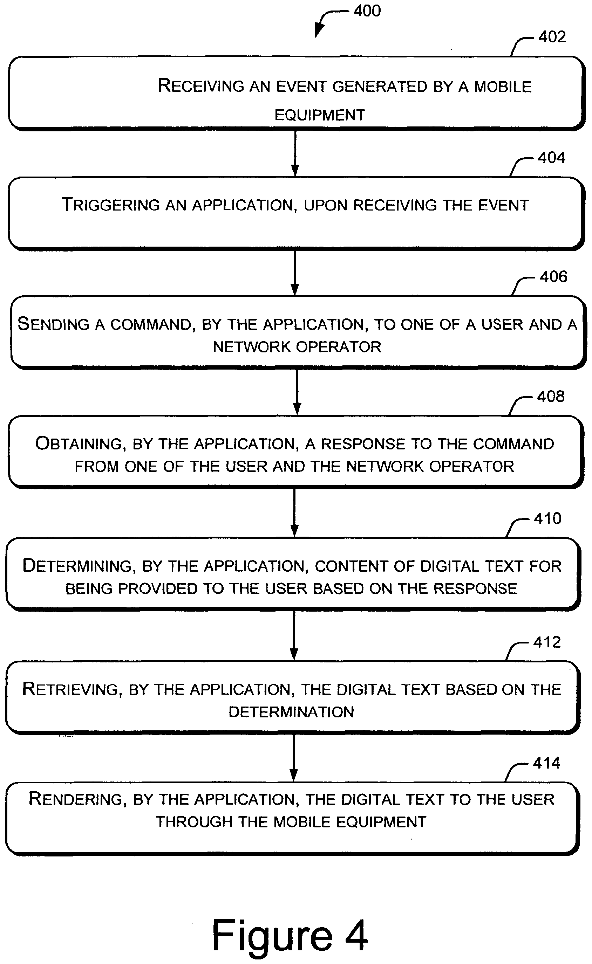

Figure 4 illustrates a method 400 for providing digital text to a user of a mobile equipment (ME) 104, in accordance with an embodiment of the present subject matter. The order in which the method 400 is described is not intended to be construed as a limitation. Additionally, some of the individual blocks may be deleted from the method 400 without departing from the spirit and scope of the subject matter described herein. Furthermore, the method 400 can be implemented in any suitable hardware, software, firmware, or combination thereof.

The method 400 may be described in the general context of computer executable instructions. Generally, computer executable instructions can include routines, programs, objects, components, data structures, procedures, modules, functions, etc., that perform particular functions or implement particular abstract data types.

At block 402, an event generated by the ME 104 is received by a smart card 102. In an implementation, the event may be generated at a time when the ME 104 is switched ON by the user for the first time. In another implementation, the event may be generated at any other time. The generated event may be a terminal profile download or any other event. The terminal profile describes the functionalities of the smart card 102, that may be supported by the ME 104 and the other profiles may include, for example, call connected, call disconnected, and idle screen available (blank screen). According to an implementation, the smart card 102 receives the event generated by the ME 104.

At block 404, an application 120 is triggered, upon receiving the event. The application 120 allows the user to interact with the smart card 102. The application 120, pre-installed in the smart card 102, may be a JAVA applet, a plug-in for web browsers, such as SIM Alliance Toolbox (S@T), PICO and wireless internet browser (WIB), or a web server. In an implementation, the smart card 102 triggers the application 120.

At block 406, a command is sent by the application 120 to one of a user and a network operator 108. Based on the command, the application 120 can interact with the user or the network operator 108. In an example, the command can include a request to Get Input, Display Text, and Setup Menu. The command may be a request for determining a type of subscription of the smart card 102. The subscription type may include, for example, a postpaid subscription, a prepaid subscription, business subscription or group subscription, and consumer subscription.

At block 408, a response to the command is obtained by the application 120, from one of the user and the network operator 108. As indicated in the previous block, command may be a request for determining a type of subscription of the smart card 102. In an example, the user or the network operator 108 may provide his response that the subscription type is prepaid connection.

At block 410, content of digital text for being provided to the user is determined by the application 120, based on the response. In an implementation, the digital text may include terms and conditions (T&C) associated with the smart card 102. For different types of subscription of the smart card 102, the content of the T&C may be different. For example, the content of the T&C may be different for a prepaid subscription type in comparison to a postpaid subscription type. If the response to the command provided by the user or the network operator 108 is "postpaid subscription", then the T&C related to the postpaid subscription may be determined.

At block 412, the digital text is retrieved, by the application, based on the determination. The digital text may be retrieved from memory 112 of the smart card 102. In an example, if the response to the command provided by the user is "prepaid subscription", then the T&C related to the prepaid subscription is determined. Further, the application 120 retrieves the T&C related to the prepaid subscription from the memory 112 of the smart card 102.

At block 414, the application 120 renders the digital text to the user through the ME 104. In an implementation, the application 120 renders the digital text to the user in an index form. The user may read the digital text immediately or at a later stage. According to an implementation, the user may read the digital content a menu, set up on the ME 104. In another implementation, the application 120 may send a command to the ME 104 for launching a web browser for providing the digital text to the user.

Although embodiments for providing digital text to a user of a mobile equipment (ME), have been described in a language specific to structural features and/or methods, it is to be understood that the invention is not necessarily limited to the specific features or methods described. Rather, the specific features and methods are disclosed as exemplary embodiments for providing the digital text to the user of the ME.

## Claims

1. A method for rendering digital text on a mobile equipment (ME) (104), the method comprising:
determining a status of a flag associated with an application (120) on a smart card (102) upon receiving an event generated by the ME (104);
triggering the application (120) on the smart card (102) based on the determining;
retrieving, by the application (120), the digital text from the smart card (102); and
rendering the digital text on the ME (104) to facilitate network authentication of the smart card (102).

2. The method as claimed in claim 1, further comprising determining, by the application (120), content of the digital text for being rendered.

3. The method as claimed in claim 2, wherein the digital text corresponds to terms and conditions and wherein the determining comprises sending a command to one of a user and a network operator (108) to determine a type of subscription of the smart card (102).

4. The method as claimed in any one of claims 2 or 3, wherein the determining comprises sending a request of Unstructured Supplementary Service Data (USDD) to the network operator (108) in order to check the type of subscription of the smart card (102).

5. The method as claimed in any one of claims 3 or 4, further comprising indicating a non acceptance of the terms and conditions based on at least one of allocating a fake international mobile subscriber identity (IMSI), generating a wrong result, and generating a status word error.

6. The method as claimed in claim 5, further comprising refreshing the ME (104) on acceptance of the terms and conditions to facilitate the network authentication of the smart card (102).

7. The method as claimed in any one of the preceding claims, wherein the event includes one of a terminal profile download associated with the ME (104), a first update of local information (LOCI), an external file update according to standard mechanism 3GPP GSM 11.14, a call connected, a call disconnected, a user activity on the ME 104, and an idle screen available.

8. The method as claimed in any one of the preceding claims, further comprising sending a setup menu command from the application (120) to the ME (104) to set up a STK menu on the ME (104) to facilitate the user to refer to the digital text and select a section of interest in the digital text.

9. The method as claimed in claim 1, wherein the retrieving comprises decompressing the digital text before rendering.

10. The method as claimed in claim 1, wherein the rendering comprises providing options on a graphical user interface (GUI) for reading the digital text immediately and reading the digital text later.

11. The method as claimed in any one of the preceding claims, wherein the application (120) is one of a JAVA applet and a plug-in for a web browser.

12. The method as claimed in claim 11, wherein the plug-in is one of a PICO, a SIM Alliance Toolbox (S@T), and a Wireless Internet Browser (WIB).

13. A smart card (102) comprising:
a processor (110);
a memory (112) coupled to the processor (110), the memory (112) to store digital text;
a triggering module (116), coupled to the processor (110), to,
receive an event generated by a mobile equipment (ME) (104),
determine a status of a flag associated with an application (120) on the smart card (102) upon receiving the event; and
generate a trigger based on the status of the flag; and the application (120) to,
retrieve the digital text from the memory (112), on receiving the trigger; and
render the retrieved digital text on the ME (104) to facilitate network authentication of the smart card (102).

14. The smart card (102) as claimed in claim 13, wherein the application (120) further determines content of the digital text for being provided to a user, upon generation of the trigger.

15. The smart card (102) as claimed in claim 13, wherein the smart card (102) is one of a Universal Integrated Circuit Card (UICC), a Subscriber Identity Module (SIM) card, an embedded eUICC, and embedded eSIM.

16. The smart card (102) as claimed in claims 13 or 14, wherein the application (120) further renders the digital text in an index form.

17. The smart card (102) as claimed in claim 14, wherein the digital text comprises terms and conditions associated with the smart card (102).

18. The smart card (102) as claimed in claim 17, wherein the application (120) provides the network authentication to the smart card (102) when a user accepts the terms and conditions.

19. The smart card (102) as claimed in claim 18, wherein the application (120) further sends reminders to the user to accept the terms and conditions, wherein the reminders are sent based on a timer.

20. The smart card (102) as claimed in claim 18, wherein the application (120) further indicates a non acceptance of the terms and conditions based on at least one of allocation of a fake IMSI, generation of a wrong result and generation of a status word error.

21. The smart card (102) as claimed in claim 20, wherein the application (120) further refreshes the ME (104) on acceptance of the terms and conditions to facilitate network authentication.

22. The smart card (102) as claimed in any one of claims 18-21, wherein the application (120) further deletes the digital text from the memory (112) and generates smart card use files on acceptance of the terms and conditions.

23. A Mobile equipment (104) comprising a smart card (102), the smart card (102) comprising:
a memory (112) to store digital text;
a triggering module (116) to,
receive an event generated by the ME (104);
determine a status of a flag associated with an application (120) on the smart card (102) upon receiving the event; and
generate a trigger based on the status of the flag; and the application (120) to,
retrieve the digital text from the memory (112), on receiving the trigger; and
render the retrieved digital text on the ME (104) to facilitate network authentication of the smart card (102).

## Patentansprüche

1. Eine Methode, um digitalen Text auf mobilen Geräten (MG) (104) zu rendern; die Methode umfasst Folgendes:
Ermittlung des Status der zur Anwendung (120) gehörenden Flag auf der Chipkarte (102) nachdem vom MG (104) ein Ereignis erstellt wurde;
Ausführung der Anwendung (120) auf der Chipkarte (102) entsprechend der Ermittlung; Wiederherstellung des digitalen Textes von der Chipkarte (102) durch die Anwendung (120); und Rendern des digitalen Textes auf dem MG (104), um Netzwerkauthentifizierung auf der Chipkarte (102) zu ermöglichen.

2. Eine Methode entsprechend Anspruch 1, in der von der Anwendung (120) zusätzlich die Inhaltsbestimmung des gerenderten Textes enthalten ist.

3. Eine Methode entsprechend Anspruch 2, bei der der digitale Text den Geschäftsbestimmungen entspricht und die Ermittlung den Versand eines Befehls an einen Benutzer und an den Netzbetreiber (108) umfasst, um die Art des Abonnements auf der Chipkarte (102) zu ermitteln.

4. Eine Methode entsprechend den Ansprüchen 2 oder 3, bei der es sich um den Versand einer Anfrage von Unstructured Supplementary Service Data (USDD) an den Netzbetreiber (108) handelt, um die Art des Abonnements auf der Chipkarte (102) zu überprüfen.

5. Eine Methode entsprechend den Ansprüchen 3 oder 4, bei denen zusätzlich basierend auf der Zuweisung einer falschen International Mobile Subscriber Identity (IMSI; deutsch Internationale Mobilfunk-Teilnehmerkennung) die Annahmeverweigerung der Geschäftsbedingungen angegeben wird; dies führt zu einem falschen Ergebnis, wodurch eine Wort-Fehlermeldung angezeigt wird.

6. Eine Methode entsprechend Anspruch 5, bei der zusätzlich die Aktualisierung des MG (104) bei Annahme der Geschäftsbedingungen enthalten ist, um die Netzwerkauthentifizierung auf der Chipkarte (102) zu ermöglichen.

7. Eine Methode entsprechend den vorhergehenden Ansprüchen, bei der das Ereignis Folgendes enthält: Ein Download des mit dem MG (104) verbundenen Endgerät-Profils, ein erstes Update der lokalen Informationen (LOCI), ein externes Daten-Update entsprechend dem standardmäßigen Mechanismus 3GPP GSM 11.14, eine aktive Verbindung, eine getrennte Verbindung, die Benutzeraktivität auf dem MG 104 und einen verfügbaren Ruhebildschirm.

8. Eine Methode entsprechend den vorhergehenden Ansprüchen, bei der die Anwendung (120) zusätzlich ein Setup-Menübefehl an das MG (104) sendet, um auf dem MG (104) ein STK-Menü einzurichten, um dem Benutzer den digitalen Text zur Verfügung zu stellen, aus dem er dann einen Bereich von Interesse auszuwählen kann.

9. Eine Methode entsprechend Anspruch 1, bei der die Wiederherstellung vor dem Rendern eine Dekomprimierung beinhaltet.

10. Eine Methode entsprechend Anspruch 1, bei der beim Rendern Optionen für eine grafische Benutzeroberfläche (GUI) zur Verfügung gestellt werden, auf der der digitale Text direkt oder zu einem späteren Zeitpunkt gelesen werden kann.

11. Eine Methode entsprechend den vorhergehenden Ansprüchen, bei der die Anwendung (120) als JAVA-Applet oder als Plug-In für einen Webbrowser zur Verfügung gestellt wird.

12. Eine Methode entsprechend Anspruch 11, bei der das Plug-In als PICO, als SIM Alliance Toolbox (S@T) und als Wireless Internet Browser (WM) funktioniert.

13. Eine Chipkarte (102), die Folgendes enthält:
Einen Prozessor (110);
einen Speicher (112), der mit dem Prozessor (110) gekoppelt ist - der Speicher (112) dient zur Speicherung des digitalen Textes;
Ein auslösendes Modul (116), das mit dem Prozessor (110) gekoppelt ist, um ein Ereignis zu empfangen, das von einem mobilen Gerät (MG) (104) erstellt wurde, Ermittlung des Status der zur Anwendung (120) gehörenden Flag auf der Chipkarte (102), nachdem das Ereignis empfangen wurde;
und
einen Auslöser entsprechend dem Status der Flag erstellt; und
eine Anwendung (120), um den digitalen Text aus dem Speicher (112) bei Empfang des Auslöser wiederherzustellen;
und
den wiederhergestellten digitalen Text auf dem MG (104) zu rendern, um bereitstellen die Netzwerkauthentifizierung auf der Chipkarte (102) zu ermöglichen.

14. Eine Chipkarte (102) entsprechend Anspruch 13, in der die Anwendung (120) zusätzlich den Inhalt des vom Benutzer eingegebenen digitalen Textes nach Erzeugung des Auslösers bestimmt.

15. Eine Chipkarte (102) entsprechend Anspruch 13, bei der die Chipkarte (102) entweder eine Universal Integrated Circuit Card (UICC), eine Subscriber Identity Module (SIM) Karte, eine eingebettete eUICC oder eine eingebettete eSIM-Karte ist.

16. Eine Chipkarte (102) entsprechend Anspruch 13 oder 14, bei der die Anwendung (120) zusätzlich den digitalen Text in indexierter Form rendert.

17. Eine Chipkarte (102) entsprechend Anspruch 14, bei der der digitale Text die Geschäftsbedingungen im Zusammenhang mit der Chipkarte (102) enthält.

18. Eine Chipkarte (102) entsprechend Anspruch 17, wobei die Anwendung (120) eine Netzwerkauthentifizierung für die Chipkarte (102) bereitstellt, wenn der Benutzer die Geschäftsbedingungen annimmt.

19. Eine Chipkarte (102) entsprechend Anspruch 18, in dem die Anwendung (120) zusätzlich Erinnerungen zur Annahme der Geschäftsbedingungen an den Benutzer sendet; diese Erinnerungen werden durch einen Zeitschalter gesendet.

20. Eine Chipkarte (102) entsprechend Anspruch 18, bei der die Anwendung (120) zusätzlich die Annahmeverweigerung der Geschäftsbedingungen aufgrund von mindestens entweder einer Zuweisung eines falschen IMSI, der Erstellung eines falschen Ergebnisses oder der Erstellung des Status der Wort-Fehlermeldung angibt.

21. Eine Chipkarte (102) entsprechende Anspruch 20, bei der die Anwendung (120) zusätzlich das MG (104) bei Annahme der Geschäftsbedingungen aktualisiert, um die Netzwerkauthentifizierung zu ermöglichen.

22. Eine Chipkarte (102) entsprechend Anspruch 18-21, bei der die Anwendung (120) zusätzlich den digitalen Text vom Speicher (112) löscht und bei Annahme der Geschäftsbedingungen Benutzerdaten auf der Chipkarte erstellt.

23. Ein mobiles Gerät (104), das eine Chipkarte (102) enthält und diese Chipkarte (102) wiederum Folgendes umfasst:
Einen Speicher (112) zur Speicherung von digitalem Text;
Ein auslösendes Modul (116), um
ein von dem MG (104) erstelltes Ereignis zu empfangen;
Ermittlung des Status der zur Anwendung (120) gehörenden Flag auf der Chipkarte (102), nachdem das Ereignis empfangen wurde;
und
einen Auslöser entsprechend dem Status der Flag erstellt; und
eine Anwendung (120), um den digitalen Text aus dem Speicher (112) bei Empfang des Auslöser wiederherzustellen;
und
den wiederhergestellten digitalen Text auf dem MG (104) zu rendern, um bereitstellen die Netzwerkauthentifizierung auf der Chipkarte (102) zu ermöglichen.

## Revendications

1. Procédé destiné à afficher un texte numérique sur un équipement mobile (EM) (104), comprenant :
la détermination d'un état de drapeau associé à une application (120) sur une carte à puce (102) après réception d'un évènement généré par l'EM (104) ;
le déclenchement de l'application (120) sur la carte à puce (102) selon la détermination ; la récupération, par l'application (120), du texte numérique à partir de la carte à puce (102), et l'affichage du texte numérique sur l'EM (104) afin de faciliter l'authentification réseau de la carte à puce (102) .

2. Procédé selon la revendication 1, comprenant en outre la détermination, par l'application (120), du contenu du texte numérique à afficher.

3. Procédé selon la revendication 2, dans lequel le texte numérique correspond aux conditions générales d'utilisation, et dans lequel la détermination comprend l'envoi d'une commande à un d'un utilisateur et d'un opérateur réseau (108) pour déterminer un type d'abonnement de la carte à puce (102).

4. Procédé selon l'une quelconque des revendications 2 ou 3, dans lequel la détermination comprend l'envoi d'une requête de Données de service supplémentaires non structurées (USDD) à l'opérateur réseau (108) afin de vérifier le type d'abonnement de la carte à puce (102).

5. Procédé selon l'une quelconque des revendications 3 ou 4, comprenant en outre l'indication d'une non acceptation des conditions générales d'utilisation, sur la base d'au moins une de l'affectation d'une fausse identité d'abonné mobile internationale (IMSI), de la génération d'un résultat erroné, et de la génération d'une erreur de mot d'état.

6. Procédé selon la revendication 5, comprenant en outre le rafraîchissement de l'EM (104) après acceptation des conditions générales d'utilisation pour faciliter l'authentification réseau de la carte à puce (102).

7. Procédé selon l'une quelconque des revendications précédentes, dans lequel l'évènement comprend l'un(e) d'un téléchargement de profil de terminal associé à l'EM (104), d'une première mise à jour des informations locales (LOCI), d'une mise à jour de fichier externe selon le mécanisme standard 3GPP GSM 11.14, d'un appel connecté, d'un appel déconnecté, d'une activité utilisateur sur l'EM (104), et d'un écran de veille disponible.

8. Procédé selon l'une quelconque des revendications précédentes, comprenant en outre l'envoi d'une commande de menu de configuration à partir de l'application (120) vers l'EM (104) afin de paramétrer un menu STK sur l'EM (104) pour aider l'utilisateur à se reporter au texte numérique et sélectionner une section d'intérêt dans le texte numérique.

9. Procédé selon la revendication 1, dans lequel la récupération comprend la décompression du texte numérique avant l'affichage.

10. Procédé selon la revendication 1, dans lequel l'affichage comprend la fourniture d'options sur une interface graphique utilisateur (IGU) pour lire le texte numérique immédiatement et ultérieurement.

11. Procédé selon l'une quelconque des revendications précédentes, dans lequel l'application (120) est une d'une appliquette JAVA et d'un module d'extension pour un navigateur Internet.

12. Procédé selon la revendication 11, dans lequel le module d'extension est un d'un PICO, d'une SIM Alliance Toolbox (S@T), et d'un Navigateur Internet sans fil (WIB).

13. Carte à puce (102) comprenant :
un processeur (110) ;
une mémoire (112) couplée au processeur (110), la mémoire (112) étant destinée à enregistrer un texte numérique ;
un module de déclenchement (116), couplé au processeur (110), afin de :
recevoir un évènement généré par un équipement mobile (EM) (104),
déterminer un état de drapeau associé à une application (120) sur la carte à puce (102) après réception de l'événement ;
et
générer un déclencheur en fonction de l'état du drapeau ; et
l'application (120) pour
récupérer le texte numérique dans la mémoire (112), après réception du déclencheur ; et
d'afficher le texte numérique récupéré sur l'EM (104) pour faciliter l'authentification réseau de la carte à puce (102).

14. Carte à puce (102) selon la revendication 13, dans laquelle l'application (120) détermine en outre le contenu du texte numérique à fournir à un utilisateur, après génération du déclencheur.

15. Carte à puce (102) selon la revendication 13, dans laquelle la carte à puce (102) est une d'une Carte de circuit intégré universelle (UICC), d'une Carte de module d'identité de l'abonné (SIM), d'une eUICC embarquée, et d'une eSIM embarquée.

16. Carte à puce (102) selon la revendication 13 ou 14, dans laquelle l'application (120) affiche en outre le texte numérique sous la forme d'un index.

17. Carte à puce (102) selon la revendication 14, dans laquelle le texte numérique comprend les conditions générales d'utilisation associées à la carte à puce (102).

18. Carte à puce (102) selon la revendication 17, dans laquelle l'application (120) fournit l'authentification réseau à la carte à puce (102) lorsqu'un utilisateur accepte les conditions générales d'utilisation.

19. Carte à puce (102) selon la revendication 18, dans laquelle l'application (120) envoie en outre des rappels à l'utilisateur pour accepter les conditions générales d'utilisation, dans laquelle les rappels sont envoyés selon une fréquence donnée.

20. Carte à puce (102) selon la revendication 18, dans laquelle l'application (120) indique en outre un refus des conditions générales d'utilisation, sur la base d'au moins une d'une affectation d'une fausse identité d'abonné mobile internationale (IMSI), d'une génération d'un résultat erroné, et d'une génération d'une erreur de mot d'état.

21. Carte à puce (102) selon la revendication 20, dans laquelle l'application (120) rafraîchit en outre l'EM (104) en cas d'acceptation des conditions générales d'utilisation afin de faciliter l'authentification réseau.

22. Carte à puce (102) selon l'une quelconque des revendications 18 à 21, dans laquelle l'application (120) supprime en outre le texte numérique de la mémoire (112) et génère des fichiers d'utilisation de la carte à puce en cas d'acceptation des conditions générales d'utilisation.

23. Équipement mobile (104) comprenant une carte à puce (102), la carte à puce (102) comprenant :
une mémoire (112) pour enregistrer un texte numérique ;
un module de déclenchement (116) pour :
recevoir un évènement généré par l'EM (104) ;
déterminer l'état d'un drapeau associé à une application (120) sur la carte à puce (102) après réception de l'évènement ;
et
générer un déclencheur selon l'état du drapeau ; et
l'application (120) afin :
de récupérer le texte numérique dans la mémoire (112), après réception du déclencheur ;
et
d'afficher le texte numérique récupéré sur l'EM (104) pour faciliter l'authentification réseau de la carte à puce (102).
